(19) **Europäisches Patentamt**
**European Patent Office**
**Office européen des brevets**

(11) **EP 4 553 776 A1**

(12) **EUROPEAN PATENT APPLICATION**
published in accordance with Art. 153(4) EPC

(43) Date of publication:
**14.05.2025 Bulletin 2025/20**

(51) International Patent Classification (IPC):
***G06T 15/00*** (2011.01)

(21) Application number: **23851213.1**

(22) Date of filing: **08.03.2023**

(52) Cooperative Patent Classification (CPC):
**G06T 15/30; G06T 15/00**

(86) International application number:
**PCT/CN2023/080235**

(87) International publication number:
**WO 2024/031977 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.08.2022 CN 202210960503**

(71) Applicant: **Huawei Cloud Computing
Technologies Co., Ltd.
Guiyang, Guizhou 550025 (CN)**

(72) Inventor: **LI, Jianwen
Guiyang, Guizhou 550025 (CN)**

(74) Representative: **Goddar, Heinz J.
Boehmert & Boehmert
Anwaltspartnerschaft mbB
Pettenkoferstrasse 22
80336 München (DE)**

(54) **IMAGE RENDERING METHOD, APPARATUS AND DEVICE**

(57) An image rendering method, apparatus, and device are provided. In this application, a rendering apparatus obtains a to-be-rendered object set. The to-be-rendered object set includes objects that need to be displayed in a plurality of fields of view at a first moment. The rendering apparatus processes each object in the to-be-rendered object set, to obtain a DAG corresponding to each object in the to-be-rendered object set. The DAG corresponding to the object describes an association relationship between clusters at a plurality of levels of the object, and a node in the DAG corresponding to the object represents a cluster at one level of the object. The rendering apparatus performs node clipping on the node in the DAG corresponding to each object, to generate a to-be-rendered node list corresponding to the first moment, and renders a cluster included in the to-be-rendered node list corresponding to the first moment. The rendering apparatus can synchronously process objects that need to be displayed in the plurality of fields of view at a same moment, to obtain rendered images at the same moment in the plurality of fields of view, implementing image rendering in a plurality of fields of view, and improving image rendering efficiency.

FIG. 4

**Description**

CROSS-REFERENCE TO RELATED APPLICATIONS

This application claims priority to Chinese Patent Application No. 202210960503.8, filed with the China National Intellectual Property Administration on August 11, 2022 and entitled "IMAGE RENDERING METHOD, APPARATUS, AND DEVICE", which is incorporated herein by reference in its entirety.

TECHNICAL FIELD

This application relates to the field of image processing technologies, and in particular, to an image rendering method, apparatus, and device.

BACKGROUND

A rendering technology is one of important research topics in three-dimensional computer graphics. In the rendering technology, three-dimensional scene data and environment data are output, through calculation, as an image that simulates a real world.

A rasterization rendering pipeline is one of mainstream rendering technologies. In the rasterization rendering pipeline, before rendering, culling needs to be first performed at a granularity of an object, to exclude an object that is not displayed in a field of view; and in a rendering process, node clipping is performed at a granularity of a patch of the object, to remove a patch that is not displayed in the field of view. However, currently, clipping in the rendering process is applicable to a single field of view, and in the rendering process, clipping of a to-be-rendered object in only one field of view at a granularity of a patch can be processed at one time. One clipping operation needs to be performed in each field of view, to obtain rendered images in a plurality of fields of view. Such a processing manner is inapplicable to a multi-field of view scenario in which there is a high latency requirement.

SUMMARY

This application provides an image rendering method, apparatus, and device, to implement image rendering in a plurality of fields of view.

According to a first aspect, an embodiment of this application provides an image rendering method. The method may be performed by a rendering apparatus. In the method, the rendering apparatus may first obtain a to-be-rendered object set. The to-be-rendered object set includes objects that need to be displayed in a plurality of fields of view at a first moment. After obtaining the to-be-rendered object set, the rendering apparatus may process each object in the to-be-rendered object set. The processing includes: obtaining clusters at a plurality of levels of each object, and constructing, for each object, the clusters at the plurality of levels of the object. After processing each object, the rendering apparatus may obtain a DAG corresponding to each object in the to-be-rendered object set. The DAG corresponding to the object describes an association relationship between clusters at the plurality of levels of the object, and one node in the DAG corresponding to the object represents one cluster at one level of the object. The rendering apparatus may perform node clipping on the node in the DAG corresponding to each object, to generate a to-be-rendered node list corresponding to the first moment, and render a cluster included in the to-be-rendered node list corresponding to the first moment, to obtain rendered images at the first moment in the plurality of fields of view.

According to the method, the rendering apparatus can synchronously process objects that need to be displayed in the plurality of fields of view at a same moment, to obtain rendered images at the same moment in the plurality of fields of view, implementing image rendering in the plurality of fields of view can be implemented, and effectively improving image rendering efficiency.

In a possible implementation, the to-be-rendered node list corresponding to the first moment includes a plurality of nodes, and the plurality of nodes are grouped from a perspective of the field of view. The plurality of nodes may be divided into a plurality of groups, and each group corresponds to one field of view.

A node in each group meets the following conditions:

Condition 1: A screen space error of the node at the first moment is not greater than an error threshold of the field of view.

Condition 2: A screen space error of a parent node of the node at the first moment is greater than the error threshold of the field of view.

In the method, when the to-be-rendered node list is obtained, not only a relationship between the screen space error of the node at the first moment and the error threshold of the field of view is considered, but also a relationship between the screen space error of the parent node of the node at the first moment and the error threshold of the field of view is considered, so that the rendering apparatus can efficiently and flexibly implement node clipping. In addition, the to-be-rendered node list includes a cluster that needs to be rendered in each field of view, to ensure that the rendered images at the first moment in the plurality of fields of view can be obtained subsequently based on the cluster included in the to-be-rendered node list, and further ensure that image rendering in the plurality of fields of view can be implemented.

In a possible implementation, when performing node clipping on the node in the DAG corresponding to each object, to generate the to-be-rendered node list corresponding to the first moment, the rendering apparatus may further generate a to-be-deleted node list corresponding to the first moment. Similar to the to-be-rendered node list corresponding to the first moment, the to-be-deleted node list corresponding to the first moment includes a plurality of nodes, and the plurality of nodes may be divided into a plurality of groups from a perspective of the field of view. Each group corresponds to one field of view.

A node in each group meets the following conditions:

Condition 1: A screen space error of the node at the first moment is not greater than the error threshold of the field of view.
Condition 2: A screen space error of a parent node of the node at the first moment is not greater than the error threshold of the field of view.

In the method, when the to-be-deleted node list is obtained, not only a relationship between the screen space error of the node at the first moment and the error threshold of the field of view is considered, but also a relationship between the screen space error of the parent node of the node at the first moment and the error threshold of the field of view is considered, so that the rendering apparatus can efficiently and flexibly implement node clipping.

In a possible implementation, the rendering apparatus may generate a to-be-rendered node list corresponding to a next moment based on a to-be-rendered node list and a to-be-deleted node list that correspond to an earlier moment, and render a cluster included in the to-be-rendered node list corresponding to the next moment, to obtain rendered images in the plurality of fields of view at a next moment. For example, a next moment of the first moment is a second moment. The rendering apparatus may generate a to-be-rendered node list corresponding to the second moment based on the to-be-rendered node list and the to-be-deleted node list that correspond to the first moment. After obtaining the to-be-rendered node list corresponding to the second moment, the rendering apparatus may render a cluster represented by a node in the to-be-rendered node list corresponding to the second moment, to obtain rendered images at the second moment in the plurality of fields of view.

In the method, the rendering apparatus generates the to-be-rendered node list corresponding to the next moment based on the to-be-rendered node list and the to-be-deleted node list that correspond to the earlier moment, to further obtain the rendered images in the plurality of fields of view at the next moment efficiently and quickly.

In a possible implementation, similar to the to-be-rendered node list corresponding to the first moment, nodes included in the to-be-rendered node list corresponding to the second moment are divided into a plurality of groups, and each group corresponds to one field of view; and
a node in each group meets the following conditions:

Condition 1: A screen space error of the node at the second moment is not greater than the error threshold of the field of view.
Condition 2: A screen space error of a parent node of the node at the second moment is greater than the error threshold of the field of view.

In the method, when the to-be-rendered node list corresponding to the second moment is obtained, not only a relationship between the screen space error of the node at the second moment and the error threshold of the field of view is considered, but also a relationship between the screen space error of the parent node of the node at the second moment and the error threshold of the field of view is considered, so that a node clipping manner is more flexible and faster.

In a possible implementation, when obtaining the to-be-rendered object set, the rendering apparatus may separately perform view frustum culling and occlusion culling on candidate objects in the plurality of fields of view, to obtain an object that needs to be displayed in each field of view. The rendering apparatus may obtain the to-be-rendered object set based on the object that needs to be displayed in each field of view. Operations of performing view frustum culling and occlusion culling on the candidate objects in the plurality of fields of view may be performed synchronously.

According to the method, the rendering apparatus may separately obtain objects that need to be displayed in all fields of view, and combine the objects into one to-be-rendered object set. Occurrence of repeated objects can be reduced, so that node clipping can be repeatedly performed on a same object subsequently, to improve image rendering efficiency.

According to a second aspect, an embodiment of this application further provides a rendering apparatus. The rendering apparatus has a function of implementing a behavior of the rendering apparatus in the method instance in the first aspect. For beneficial effects, refer to the descriptions in the first aspect. Details are not described herein again. The function may be implemented by hardware, or may be implemented by executing corresponding software by hardware. The hardware or software includes one or more modules corresponding to the foregoing functions. In a possible design, a structure of the rendering apparatus includes an object culling module, a node clipping module, and a node rendering module. These modules may perform corresponding functions in the method example in the first aspect. For details, refer to the detailed descriptions in the method example. Details are not described herein again.

According to a third aspect, an embodiment of this application further provides a computing device. The computing device has a function of implementing a behavior of the rendering apparatus in the method instance in the first aspect. For beneficial effects, refer to the descriptions in the first aspect. Details are not described herein again. A structure of the computing device includes a processor and a memory. The processor is configured to support the rendering apparatus to perform a corresponding function in the method in the first aspect. The memory is coupled to the processor, and stores program instructions and data that are necessary for a communication apparatus. A structure of the communication apparatus further includes a communication interface, configured to communicate with another device.

According to a fourth aspect, an embodiment of this application further provides a computing device cluster. The computing device cluster has a function of implementing a behavior of the rendering apparatus in the method instance in the first aspect. For beneficial effects, refer to the descriptions in the first aspect. Details are not described herein again. The computing device cluster includes at least one computing device. A structure of any computing device includes a processor and a memory. The processor in the any computing device is configured to support the rendering apparatus to perform some or all functions in the first aspect and the possible implementations of the first aspect. The memory is coupled to the processor, and stores program instructions and data that are necessary for a communication apparatus. The structure of the communication apparatus further includes a communication interface, configured to communicate with another device.

According to a fifth aspect, this application further provides a computer-readable storage medium. The computer-readable storage medium stores instructions, and when the instructions are run on a computer, the computer is enabled to perform the method according to the first aspect and the possible implementations of the first aspect.

According to a sixth aspect, this application further provides a computer program product including instructions. When the computer program product is run on a computer, the computer is enabled to perform the method according to the first aspect and the possible implementations of the first aspect.

According to a seventh aspect, this application further provides a computer chip. The chip is connected to a memory, and the chip is configured to read and execute a software program stored in the memory, to perform the method according to the first aspect and the possible implementations of the first aspect.

BRIEF DESCRIPTION OF DRAWINGS

FIG. 1 is a diagram of a structure of a DAG according to this application;
FIG. 2 is a diagram of an architecture of a system according to this application;
FIG. 3 is a diagram of a structure of a rendering apparatus according to this application;
FIG. 4 is a diagram of an image rendering method according to this application;
FIG. 5 is a diagram of a node clipping method according to this application;
FIG. 6A is a diagram of a relationship between all fields of view and all nodes at a first moment according to this application;
FIG. 6B is a diagram of a relationship between all fields of view and all nodes at a second moment according to this application;
FIG. 7 is a diagram of a structure of a computing device according to this application; and
FIG. 8 is a diagram of a structure of a computing device cluster according to this application.

DESCRIPTION OF EMBODIMENTS

Before an image rendering method and apparatus provided in embodiments of this application are described, related concepts in embodiments of this application are first described.

(1) Object, patch, and cluster (cluster)

An object is a person or thing that needs to be displayed in an image. Rendering of the image may be considered as rendering of each object in the image. In a rendering process of the object, the object needs to be decomposed. The patch is a minimum granularity at which the object is decomposed. The object is rendered at a granularity of the patch. For some high-precision rendering, an area of the patch is small, and a rendered object can display more details. For some low-precision rendering, an area of the patch is large, and a rendered object can display fewer details.

When the object is rendered, some corresponding clipping operations may be further performed on the object in the rendering process. The clipping operation is mainly performed to remove some unnecessary patches. To help perform the clipping operation, clipping may be performed at a granularity of the cluster, to remove some unnecessary patches. The cluster is a patch set including a plurality of patches. An object is considered as a set including one or more clusters. In this case, when the clipping operation is performed, node clipping may be performed at the granularity of the cluster, improving efficiency of the clipping operation.

(2) Level of detail (level of detail, LOD) and directed acyclic graph (DAG)

The level of detail is also referred to as a level of detail model. In embodiments of this application, the level of detail may also be briefly referred to as a level. A working principle of the level of detail model is as follows: When a viewpoint is close to an object, abundant details of the object can be observed. When the viewpoint gets away from the object, the observed details are gradually blurred.

The level may represent an abundant degree of the details of the object. A higher level indicates that more abundant details can be displayed at the level. In embodiments of this application, different levels of the object may be generated in a form of clusters. In other words, for any level, it may be considered that the object includes one or more clusters. At different levels, the object includes different quantities of clusters, and the cluster may also include different quantities of patches. For example, compared with a low level, at a high level, the object may include more clusters, and each cluster also includes fewer patches.

A directed acyclic graph is a loopless directed graph. To be specific, in the directed acyclic graph, it is impossible to return to a vertex after the vertex is used as a start point and several edges are passed through.

In embodiments of this application, a plurality of different levels of an object may be converted into one DAG, and one node in the DAG may represent one cluster at one level of the object. The DAG represents an association relationship between clusters of the object at different levels of the object.

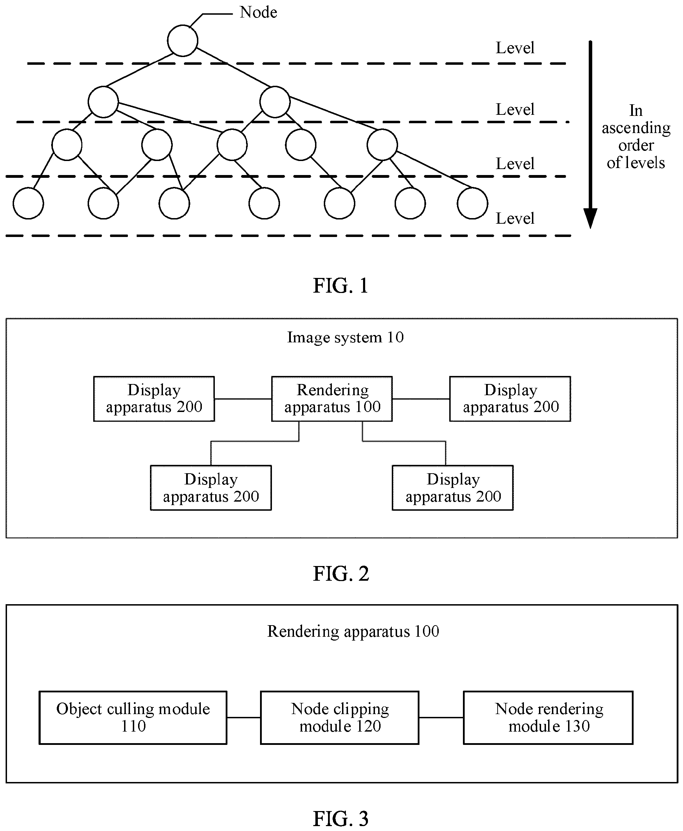

FIG. 1 shows a DAG of an object according to an embodiment of this application. In FIG. 1, there are a plurality of layers from top to bottom, and each layer is represented as one level. One or more nodes at the layer are one or more clusters at the level. Clusters with an association relationship at different levels are connected.

(3) View frustum culling

In the image rendering field, especially the VR field and the AR field, an image that can be seen by a human eye is limited by a field of view of the human eye. The field of view of the human eye is based on a field of view (field of view, FoV) of the human eye and a distance between the human eye and an object. The human eye is understood as a camera, and the field of view of the human eye is a view frustum of the camera. View frustum culling is to cull an object outside the view frustum of the camera.

(4) Occlusion culling

Occlusion culling is to cull an object that is located in the rear and that is occluded by an object in the front.

(5) Screen error threshold

Provided that a cluster at any level meets a specific condition, the cluster may be retained as a cluster that needs to be rendered. The condition may be expressed as follows:

$$d \cos(\alpha + \beta) \geq \frac{1}{\tan\left(\frac{\theta}{2}\right)} \frac{x}{2} \frac{1}{\rho} \epsilon$$

Herein, $\epsilon$ is a simplified error (error) of the cluster, and the simplified error represents an error between the cluster and a spheroid or cuboid surrounding the cluster. $\rho$ is a maximum acceptable screen space error, and can also be understood as an error threshold. The error threshold may be a default value, or may be set by a user. $\theta$ is a field of view (field of view, FoV) of a camera, x is a rendering screen width, and the rendering screen width may be a width of resolution of a rendered image. d is a shortest vertical distance from the camera to the cluster, and d may be determined based on a spatial location of the camera (which is also understood as a display apparatus in the following embodiments) and a location of the cluster. w is a width of a view frustum at the distance d. $\alpha+\beta$ is a maximum opening angle with d being an axis.

After being adjusted, the foregoing formula may be changed to:

$$\rho \geq \frac{1}{\tan\left(\frac{\theta}{2}\right)} \frac{x}{2} \frac{1}{d \cos(\alpha + \beta)} \epsilon$$

A right part of the formula is $\frac{1}{\tan\left(\frac{\theta}{2}\right)} \frac{x}{2} \frac{1}{d \cos(\alpha+\beta)} \epsilon$, and a value of the formula may indicate a screen space error of the cluster.

Therefore, it can be learned that the cluster may be used as a cluster to be rendered subsequently only when the screen space error of the cluster is less than the error threshold. When the screen space error of the cluster is greater than the error threshold, the cluster definitely does not need to be rendered, and is a cluster that may be discarded.

The screen space error of the cluster may be understood as an error when the camera displays the cluster. The screen space error of the cluster is a value related to an attribute of the cluster (for example, a size of the cluster or the location of cluster) and a location of the camera (which may also be understood as field of view information of the camera).

FIG. 2 is a diagram of an architecture of an image system according to an embodiment of this application. An image system 10 includes a rendering apparatus 100 and one or more display apparatuses 200.

Any display apparatus 200 can upload field of view information to the rendering apparatus 100. The display apparatus 200 is understood as a camera. The field of view information represents a field of view of the camera, and the field of view may be understood as a frustum. Therefore, the field of view information can indicate a height and an angle of the frustum, and can further represent a relative relationship between the camera and each object. For example, the field of view information may be a spatial location of the display apparatus 200 (the spatial location of the display apparatus 200 may be usually represented by using a three-dimensional vector) and a value of the field of view (field of view, FoV).

For example, in a virtual reality (virtual reality, VR) game in which a plurality of users participate, each user may wear VR glasses, and the VR glasses may be used as the display apparatus 200. The user moves in a process of wearing the VR glasses, and the VR glasses may report a moving distance and a deflection angle to the rendering apparatus 100 as the field of view information.

When the display apparatus 200 moves or deflects, the field of view information of the display apparatus 200 also changes, and a rendered image of the display apparatus 200 also needs to change correspondingly under impact of a change of the field of view information. In this embodiment of this application, the display apparatus 200 may periodically upload the field of view information to the rendering apparatus 100. For example, at a first moment, the display apparatus 200 may report field of view information at the first moment. Then, as time goes by and a second moment arrives after one time period, the display apparatus 200 reports field of view information at the second moment. For another example, after the display apparatus 200 initially reports the field of view information, the display apparatus 200 may report the field of view information again in subsequent time when the field of view information changes.

The rendering apparatus 100 can obtain the one or more display apparatuses 200, generate the one or more rendered images based on field of view information reported by one or more display apparatuses 200, and send the generated one or more rendered images to the one or more display apparatuses 200. Each display apparatus 200 obtains one of the rendered images.

Because different display apparatuses 200 may provide different field of view information, the rendering apparatus 100 may generate different rendered images for different display apparatuses 200. That is, the field of view information is related to the rendered image.

In addition, a same display apparatus 200 may also report different field of view information at different moments, and the rendering apparatus 100 also generates different rendered images for the display apparatus 200 based on the field of view information reported at different moments. That is, the rendered image is related to the field of view information and the moment.

In this embodiment of this application, when there are a plurality of display apparatuses 200, one display apparatus 200 can represent one field of view. The rendering apparatus 100 may obtain a to-be-rendered object set, the to-be-rendered object set includes a plurality of objects, and the plurality of objects include objects that need to be displayed in a plurality of fields of view, to generate a plurality of rendered images that need to be displayed by all display apparatuses 200 at a specific moment. One of the display apparatuses 200 needs to display only one of the rendered images at the moment. The rendering apparatus 100 generates a DAG corresponding to each object for the object, and performs node clipping based on DAGs corresponding to the plurality of objects, to generate a to-be-rendered node list corresponding to the moment. A node included in the to-be-rendered node list corresponding to the moment meets the following conditions: a screen space error of the node at the moment is not greater than an error threshold of a field of view, and a screen space error of a parent node of the node at the moment is greater than the error threshold of the field of view. After obtaining the to-be-rendered node list corresponding to the moment, the rendering apparatus 100 renders a cluster included in the to-be-rendered node list, to obtain the plurality of rendered images at the moment.

The rendering apparatus 100 can synchronously perform processing (for example, clipping at a granularity of a node, or rendering on the cluster) on the objects in the plurality of fields of view, to obtain a plurality of rendered images that need to be displayed in the plurality of fields of view. In this way, image rendering efficiency can be effectively ensured, so that a rendered image can be displayed in a timely and synchronous manner in each field of view, and real-time performance of displaying the rendered image is ensured.

In addition, when generating the to-be-rendered node list corresponding to the moment, the rendering apparatus 100 may further generate a to-be-deleted node list corresponding to the moment. A node included in the to-be-deleted node list corresponding to the moment meets the following conditions: a screen space error of the node at the moment is not greater than the error threshold of the field of view, and a screen space error of a parent node of the node at the moment is not greater than the error threshold of the field of view.

When the rendering apparatus 100 needs to generate a plurality of rendered images that need to be displayed by all the display apparatuses 200 at a next moment, the rendering apparatus 100 may perform node clipping on the node in the to-be-rendered node list and the node in the to-be-deleted node list that correspond to a prior moment, to generate a to-be-rendered node list at the next moment. A node included in the to-be-rendered node list corresponding to the next moment meets the following conditions: a screen space error of the node at the next moment is not greater than the error threshold of the field of view, and a screen space error of a parent node of the node at the next moment is greater than the error threshold of the field of view. After obtaining the to-be-rendered node list corresponding to the next moment, the rendering apparatus 100 renders a cluster included in the to-be-rendered node list, to obtain the plurality of rendered images at the next moment.

Optionally, the rendering apparatus 100 may further generate a to-be-deleted node list corresponding to the next moment. A node included in the to-be-deleted node list corresponding to the next moment meets the following conditions: a screen space error of the node at the next moment is not greater than the error threshold of the field of view, and a screen space error of a parent node of the node at the next moment is not greater than the error threshold of the field of view. The rendering apparatus 100 generates, in a similar manner based on the to-be-deleted node list and the to-be-rendered node list that correspond to the next moment, a plurality of rendered images that need to be displayed by all the display apparatuses 200 at a moment after the next moment.

The rendering apparatus 100 generates the to-be-rendered node list corresponding to the next moment based on the to-be-rendered node list and the to-be-deleted node list that correspond to the earlier moment, and renders the cluster included in the to-be-rendered node list corresponding to the next moment, to obtain rendered images in all fields of view at the next moment, further improving image rendering efficiency, and improving real-time performance of displaying the rendered image.

The rendering apparatus 100 may be implemented by software, or may be implemented by hardware.

The rendering apparatus 100 is used as an example of a software functional unit. The rendering apparatus 100 may include code running on a computing instance. The computing instance may include at least one of a physical host (computing device), a virtual machine, or a container. Further, there may be one or more computing instances. For example, the rendering apparatus 100 may include code running on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers used to run the code may be distributed in a same virtual private cloud (virtual private cloud, VPC), or may be distributed in a plurality of VPCs. Usually, one VPC is disposed in one region. A communication gateway needs to be disposed in each VPC for communication between two VPCs in a same region or cross-region communication between VPCs in different regions. Interconnection between VPCs is implemented through the communication gateway.

The rendering apparatus 100 is used as an example of a hardware functional unit. The rendering apparatus 100 may include at least one computing device such as a server. Alternatively, the rendering apparatus 100 may be a device implemented by using an application-specific integrated circuit (application-specific integrated circuit, ASIC) or a programmable logic device (programmable logic device, PLD), or the like. The PLD may be a complex programmable logical device (complex programmable logical device, CPLD), a field-programmable gate array (field-programmable gate array, FPGA), a generic array logic (generic array logic, GAL), or any combination thereof.

A plurality of computing devices included in the rendering apparatus 100 may be distributed in a same region, or may be distributed in different regions. A plurality of computing devices included in an object culling module 110 may be distributed in a same AZ, or may be distributed in different AZs. Similarly, the plurality of computing devices included in the object culling module 110 may be distributed in a same VPC, or may be distributed in a plurality of VPCs. The plurality of computing devices may be any combination of computing devices such as a server, an ASIC, a PLD, a CPLD, an FPGA, and a GAL.

This application further provides a rendering apparatus 100. As shown in FIG. 3, the rendering apparatus 100 includes an object culling module 110, a node clipping module 120, and a node rendering module 130.

The object culling module 110, the node clipping module 120, and the node rendering module 130 cooperate with each other, to render objects in one or more different fields of view, so as to obtain a rendered image in the one or more fields of view. When an image is displayed in any field of view, the image is displayed frame by frame. In other words, when the image is displayed in the field of view, corresponding rendered images are displayed at different moments in a time sequence. In this embodiment of this application, the object culling module 110, the node clipping module 120, and the node rendering module 130 cooperate with each other, to generate rendered images in the one or more fields of view at different moments.

Functions of all the modules included in the rendering apparatus 100 are described below by using an example in which rendered images in the one or more fields of view at a same moment are obtained.

The object culling module 110 can perform culling on candidate objects at a granularity of an object, to obtain a to-be-rendered object set. The to-be-rendered object set includes one or more objects. The one or more objects are objects displayed in the one or more fields of view. The object culling module 110 can perform culling on objects in different fields of view at the granularity of an object, to obtain a to-be-rendered object set in the different fields of view.

Culling performed by the object culling module 110 includes but is not limited to view frustum culling and occlusion culling. All culling performed at the granularity of an object may be performed by the object culling module 110.

The node clipping module 120 is configured to perform node clipping on an object in the to-be-rendered object set at a granularity of a node. The node clipping module 120 can obtain the to-be-rendered object set from the object culling module 110. A DAG corresponding to each object included in the to-be-rendered object set is generated for the object.

The node clipping module 120 performs, at a granularity of a node in the DAG, node clipping on each node included in the DAG corresponding to each object. In the clipping process, the node clipping module determines, comprehensively based on a value relationship between the error threshold of the field of view and each of a screen space error of each node and a screen space error of a parent node of the node, whether to retain the node in the to-be-rendered node list.

In other words, after performing node clipping on each node included in the DAG corresponding to each object, the node clipping module 120 may obtain the to-be-rendered node list. The to-be-rendered node list includes a plurality of nodes, and the plurality of nodes represent clusters that need to be rendered in the objects in the one or more fields of view. Any one of the plurality of nodes meets the following conditions: a screen space error of the node is not greater than an error threshold of the field of view, and a screen space error of a parent node of the node is greater than the error threshold of the field of view.

It should be noted that, in this embodiment of this application, an example in which error thresholds of all fields of view are the same is used for description. However, in an actual application, error thresholds of different fields of view are allowed to be different. In this case, the nodes in the to-be-rendered node list may be divided into a plurality of groups, each group corresponds to one field of view, and a node in one group corresponding to one field of view meets the following conditions: a screen space error of the node is not greater than an error threshold of the field of view, and a screen space error of a parent node of the node is greater than the error threshold of the field of view.

It should be noted that the screen space error of the node is related to parameters such as d (a shortest vertical distance of a camera from a cluster), w (a width of a view frustum at the distance d), and (a maximum opening angle whose axis is d). That is, the screen space error of the node is related to a relative location between the camera and the cluster. In consideration that a location of the camera moves over time, the screen space error of the node herein represents only a screen space error of the node at a moment. For ease of description, descriptions of the moment are omitted in a process of generating rendered images at the same moment in the one or more fields of view. However, it should be understood that the screen space error of the node herein corresponds to the screen space error of the node at the moment.

Optionally, the node clipping module 120 may further obtain a to-be-deleted node list. The to-be-deleted node list includes a plurality of nodes, and the plurality of nodes represent a cluster that does not need to be rendered in the objects in the one or more fields of view. Any one of the plurality of nodes meets the following conditions: a screen space error of the node is not greater than the error threshold of the field of view, and a screen space error of a parent node of the node is not greater than the error threshold of the field of view.

In other words, in the process of generating the rendered images at the same moment in the one or more fields of view, the node clipping module 120 performs node clipping on the DAG corresponding to the object in the to-be-rendered object set in the one or more fields of view, to generate two node lists. The two node lists are the to-be-rendered node list and the to-be-deleted node list. The to-be-rendered node list and the to-be-deleted node list are two node lists corresponding to the moment.

The node included in the to-be-rendered node list represents the cluster that needs to be rendered in the objects in the one or more fields of view. The node included in the to-be-deleted node list represents the cluster that does not need to be rendered in the objects in the one or more fields of view.

The node clipping module 120 may send the to-be-rendered node list to the image rendering module, and locally store the to-be-rendered node list and the to-be-deleted node list.

The image rendering module obtains the to-be-rendered node list from the node clipping module 120, and renders each cluster included in the to-be-rendered node list, to obtain rendered images at the same moment in the one or more fields of view. When rendering each cluster included in the to-be-rendered node list, the image rendering module may load information about a patch in each cluster in the to-be-rendered node list, and render, based on loaded data, the cluster included in the to-be-rendered node list, to obtain the rendered images at the same moment in the one or more fields of view.

The foregoing describes a function of each module in the rendering apparatus 100 in the process of generating the rendered images at the same moment in the one or more fields of view.

In this embodiment of this application, all modules in the rendering apparatus 100 may have the foregoing functions in the process of generating the rendered images at a same moment in the one or more fields of view. at any moment in the one or more fields of view. However, it is considered that in an actual application, rendered images at two adjacent moments in a same field of view may be close. To further improve image rendering efficiency, the node clipping module 120 generates a to-be-rendered node list corresponding to a next moment based on a to-be-rendered node list and a to-be-deleted node list that correspond to an earlier moment and that are locally stored, and optionally, may further generate the to-be-deleted node list. In other words, the node clipping module 120 may generate the to-be-rendered node list corresponding to the next moment based on the to-be-rendered node list and the to-be-deleted node list that correspond to the earlier moment, and optionally, may further generate a to-be-deleted node list corresponding to the next moment.

The node clipping module 120 may perform node clipping on the to-be-rendered node list and the to-be-deleted node list that correspond to the prior moment, to generate the to-be-rendered node list and the to-be-deleted node list that correspond to the next moment.

A node in the to-be-rendered node list corresponding to the latter moment meets the following conditions: a screen space error of the node at the next moment is not greater than the error threshold of the field of view, and a screen space error of a parent node of the node at the latter moment is greater than the error threshold of the field of view.

A node in the to-be-deleted node list corresponding to the latter moment meets the following conditions: a screen space error of the node at the next moment is not greater than the error threshold of the field of view, and a screen space error of a parent node of the node at the latter moment is not greater than the error threshold of the field of view.

In other words, in a process of generating rendered images at the next moment in the one or more fields of view, the object culling module 110 no longer needs to perform culling on an object in the field of view at the granularity of an object, and the node clipping module 120 does not need to generate a DAG corresponding to the object, but may obtain the to-be-rendered node list corresponding to the next moment based on only the two node lists corresponding to the earlier moment. In this way, generation of the rendered images at the next moment in the one or more fields of view can be effectively accelerated, and image rendering efficiency can be improved.

The object culling module 110, the node clipping module 120, and the image rendering module may all be implemented by using software. An implementation of any one of the object culling module 110, the node clipping module 120, and the image rendering module is similar to an implementation of the rendering apparatus 100 in the foregoing content. For details, refer to the foregoing content. Details are not described herein again.

It should be noted that, in another embodiment, the object culling module 110 may be configured to perform any step in an image rendering method, the node clipping module 120 may be configured to perform any step in the image rendering method, and the image rendering module may be configured to perform any step in the image rendering method. Steps for which the object culling module 110, the node clipping module 120, and the image rendering module are responsible for an implementation may be specified based on a requirement.

The object culling module 110, the node clipping module 120, and the image rendering module respectively implement different steps in the image rendering method, to implement all functions of the rendering apparatus 100.

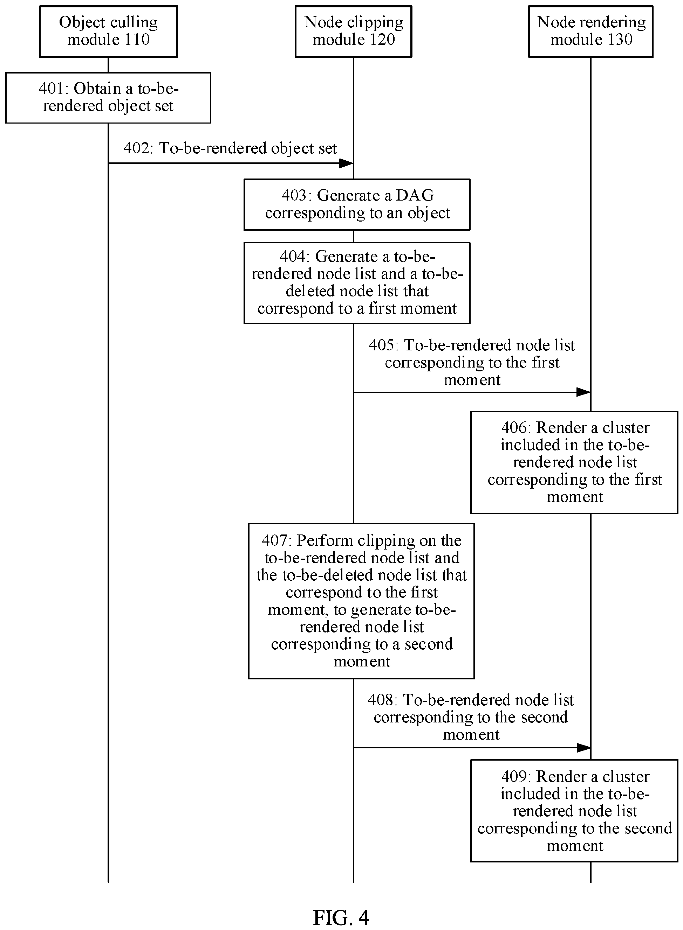

The following describes, with reference to FIG. 4, an image rendering method provided in an embodiment of this application. In the method, a process of generating a plurality of rendered images at two adjacent moments is described as an example. To facilitate distinguishing between the two adjacent moments, an earlier (the earlier moment may be understood as the prior moment mentioned in the foregoing content) is referred to as a first moment, and a latter moment (the latter moment may be understood as the next moment) is referred to as a second moment. For a process of generating a plurality of rendered images at the first moment, refer to step 401 to step 406. For a process of generating a plurality of rendered images at the second moment, refer to step 407 to step 410.

A plurality of rendered images at any other moment may be generated in a manner similar to the process of generating the plurality of rendered images at the first moment, or may be generated in a manner similar to the process of generating the plurality of rendered images at the second moment.

Step 401: An object culling module 110 performs culling on a plurality of candidate objects based on field of view information of all fields of view at the first moment, to generate a to-be-rendered object set, where the to-be-rendered object set includes a plurality of objects. Each object is marked with a field of view to which the object belongs.

For any field of view, a plurality of candidate objects are preset, and the candidate objects are objects that may be displayed in the field of view. For the field of view, after obtaining field of view information of the field of view, the object culling module 110 performs view frustum culling on the plurality of candidate objects based on the field of view information, to cull an object outside a view frustum.

For example, the field of view information is a spatial location and an FoV that are of a display apparatus 200. The object culling module 110 may determine a location and a size of the view frustum based on the field of view information, and may further perform view frustum culling on the plurality of candidate objects, to remove the object outside the view frustum through culling.

The object culling module 110 performs occlusion culling on the plurality of candidate objects based on the field of view information and a location relationship between the plurality of candidate objects, to cull an occluded candidate object, or cull a part of an occluded candidate object (which is applicable to a case in which only a part of the candidate object is occluded). In the field of view, a plurality of objects after the object culling module performs view frustum culling and occlusion culling are objects that need to be displayed in the field of view.

For each field of view, the object culling module 110 may obtain, by performing a similar operation, a plurality of objects that need to be displayed in each field of view, and the object culling module 110 collects the plurality of objects that need to be displayed in each field of view, to obtain a to-be-rendered object set. The to-be-rendered object set includes a plurality of objects, and in the to-be-rendered object set, each object may be marked with a field of view to which the object belongs. For an object that needs to be displayed in a plurality of fields of view, the object is marked with the plurality of fields of view.

It should be noted that a same object may exist in a plurality of objects that need to be displayed in any two fields of view. In other words, a same object needs to be displayed in a plurality of fields of view. For such an object that may be displayed in a plurality of fields of view, only one object needs to be retained in the to-be-rendered object set, and the object may be marked with the plurality of fields of view. In other words, the to-be-rendered object set does not need to retain a plurality of objects that are same.

Step 402: The object culling module 110 transmits the to-be-rendered object set to a node clipping module 120.

Step 403: After obtaining the to-be-rendered object set, the node clipping module 120 generates a DAG corresponding to each object in the to-be-rendered object set for the object.

For any object in the to-be-rendered object set, the node clipping module 120 may generate a plurality of levels of the object, and then generate a DAG corresponding to the object based on the plurality of levels of the object. Any node in the DAG corresponding to the object represents a cluster of the object at a level of the object.

In addition, because the object in the to-be-rendered object set is marked with a field of view to which the object belongs, each node in the DAG corresponding to the object is also marked with the field of view to which the object belongs. For any object that belongs to a plurality of fields of view, the node clipping module 120 may generate a plurality of DAGs corresponding to the object. Each DAG corresponds to one field of view. In other words, a node of each DAG represents a cluster at a level in one field of view.

Step 404: The node clipping module 120 performs node clipping on the node in the DAG corresponding to each object, to generate a to-be-rendered node list and a to-be-deleted node list that correspond to the first moment.

When performing node clipping on the node in the DAG corresponding to each object, the node clipping module 120 needs to distinguish a node that can be added to the to-be-rendered node list corresponding to the first moment, a node that can be added to the to-be-deleted node list corresponding to the first moment, and a to-be-discarded node.

Nodes in the to-be-rendered node list corresponding to the first moment may be divided into a plurality of groups based on a field of view, and a node included in each group represents a cluster of an object that needs to be displayed in one field of view. A node in any group meets the following conditions: a screen space error of the node is not greater than an error threshold of the field of view, and a screen space error of a parent node of the node is greater than the error threshold of the field of view. For a manner of calculating the screen space error of the node and the screen space error of the parent node, refer to the foregoing content. The screen space error of the node and the screen space error of the parent node are values related to an attribute of a cluster represented by the node and field of view information of the field of view. The error threshold of the field of view may be understood as an allowable display error of an image in the field of view. Error thresholds of different fields of view may be the same or different. A specific value of the error threshold of the field of view and a manner of obtaining the error threshold of the field of view are not limited in this embodiment of this application. For example, the error threshold of the field of view is default, or may be independently set by a user.

Similarly, nodes in the to-be-deleted node list corresponding to the first moment may be divided into a plurality of groups based on the field of view, and a node included in each group represents a cluster of an object that does not need to be displayed in one field of view. A node in any group meets the following conditions: a screen space error of the node is not greater than the error threshold of the field of view, and a screen space error of a parent node of the node is not greater than the error threshold of the field of view. For descriptions of the screen space error of the node, the screen space error of the parent node, and the error threshold of the field of view, refer to the foregoing content. Details are not described herein again. A cluster represented by the node in the to-be-deleted node list corresponding to the first moment is a cluster that needs to be displayed in none of the fields of view at the first moment. However, the cluster represented by the node in the to-be-deleted node list corresponding to the first moment may be a cluster that may be displayed in all the fields of view at the second moment. Therefore, the to-be-deleted node list corresponding to the first moment may be retained, to obtain a to-be-rendered node list corresponding to the second moment.

Similarly, to-be-discarded nodes may be divided into a plurality of groups based on the field of view, and a node included in each group represents a cluster of an object that needs to be discarded in a field of view. A node in any group meets the following condition: a screen space error of the node is greater than an error threshold of the field of view. Such a node is directly discarded, that is, does not need to be added to any node list.

To be specific, each time the node clipping module 120 extracts a node in a DAG corresponding to an object, the node clipping module 120 may first calculate a screen space error of the node and a screen space error of a parent node, and obtain an error threshold of a field of view to which the node belongs. When the screen space error of the node, the screen space error of the parent node, and the error threshold of the field of view to which the node belongs are obtained, for the node, the node clipping module 120 may perform the following determining:

First, whether the screen space error of the node is not greater than the error threshold of the field of view to which the node belongs is determined (this is a first determining step). If the screen space error of the node is not greater than the error threshold of the field of view to which the node belongs, whether the screen space error of the parent node of the node is not greater than the error threshold of the field of view to which the node belongs continues to be determined (this is a second determining step). If the screen space error of the parent node of the node is not greater than the error threshold of the field of view to which the node belongs, the node is added to the to-be-deleted node list corresponding to the first moment, and then the node clipping module 120 may continue to extract the parent node of the node to perform determining starting from the first step. If the screen space error of the parent node of the node is greater than the error threshold of the field of view to which the node belongs, the node is added to the to-be-rendered node list corresponding to the first moment. If the screen space error of the node is greater than the error threshold of the field of view to which the node belongs, the node is a node that needs to be discarded. For such a node that needs to be discarded, whether the node intersects with the view frustum may continue to be determined. If the node intersects with the view frustum, it indicates that the node is partially located inside the view frustum and may be displayed. The node clipping module 120 discards the node, and continues to extract a child node of the node to perform determining starting from the first step. If the node does not intersect with the view frustum, it indicates that the node is located outside the view frustum and is not displayed. The node clipping module 120 may add the node to the to-be-deleted node list corresponding to the first moment.

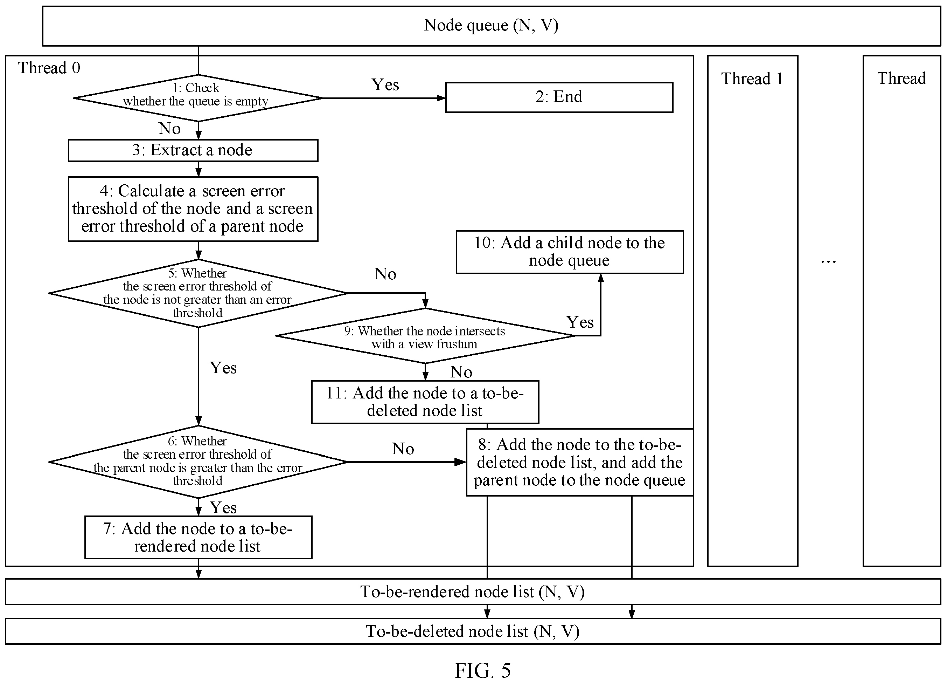

In an actual application, the node clipping module 120 may invoke one or more threads to perform step 404. FIG. 5 is a diagram in which a node clipping module 120 invokes a plurality of threads to perform node clipping. Operations performed by all the threads are similar. Herein, a thread 0 is used as an example for description.

The plurality of threads may maintain one node queue. The node queue carries a node in a DAG corresponding to an object, the node is identified by N, and different nodes are represented by different subscripts of N. A field of view to which a node belongs is identified by V, and different fields of view are represented by different subscripts of V. Therefore, a node in any DAG may be represented by an array $(N_i, V_i)$.

Initially, a node in the DAG corresponding to each object may be randomly added to the node queue. The thread 0 may perform the following steps when performing clipping:

Step 1: The thread 0 first determines whether the node queue is empty, and performs step 2 if the node queue is empty, or performs step 3 if the node queue is not empty.

Step 2: If the node queue is empty, it indicates that no node needs to be clipped. In this case, this procedure may end.

Step 3: If the node queue is not empty, the thread 0 extracts one node $(N_i, V_i)$ from the node queue.

Step 4: The thread 0 calculates a screen error threshold of the node and a screen error threshold of a parent node of the node.

Calculation of the screen error threshold of the node is used as an example. When field of view information of one field of view is the spatial location and the FoV that are of the display apparatus 200, the thread 0 may obtain d based on the spatial location of the display apparatus 200 and a cluster represented by the node. The FoV is used as $\theta$ and is substituted into a calculation formula of the screen error threshold, to obtain the screen error threshold of the node.

Step 5: The thread 0 determines whether the screen error threshold of the node is not greater than an error threshold of a field of view to which the node belongs, and performs step 6 if the screen error threshold of the node is not greater than the error threshold of the field of view to which the node belongs, or performs step 9 if the screen error threshold of the node is greater than the error threshold of the field of view to which the node belongs.

Step 6: If the screen error threshold of the node is not greater than the error threshold of the field of view to which the node belongs, the thread 0 determines whether the screen error threshold of the parent node of the node is greater than the error threshold of the field of view to which the node belongs, and performs step 7 if the screen error threshold of the parent node of the node is greater than the error threshold of the field of view to which the node belongs, or performs step 8 if the screen error threshold of the parent node of the node is not greater than the error threshold of the field of view to which the node belongs.

Step 7: When the screen error threshold of the node is greater than the error threshold of the field of view to which the node belongs, the thread 0 adds the node to the to-be-rendered node list.

Step 8: If the screen error threshold of the node is not greater than the error threshold of the field of view to which the node belongs, the thread 0 adds all parent nodes of the node to the node queue, and adds the node to the to-be-deleted node list.

Step 9: When the screen error threshold of the node is greater than the error threshold of the field of view to which the node belongs, the thread 0 determines whether the node intersects with a view frustum of the field of view to which the node belongs, and performs step 10 if the node intersects with the view frustum of the field of view to which the node belongs; or performs step 11 if the node does not intersect with the view frustum of the field of view to which the node belongs.

Step 10: The thread 0 adds all child nodes of the node to the node queue, and discards the node.

Step 11: The thread 0 adds the node to the to-be-deleted node list.

In the foregoing manner, the node clipping module 120 may obtain two node lists corresponding to the first moment. The two node lists are the to-be-rendered node list corresponding to the first moment and the to-be-deleted node list corresponding to the first moment. The node clipping module 120 locally retains the two node lists, and performs step 405.

Step 405: The node clipping module 120 transmits the to-be-rendered node list corresponding to the first moment to the node rendering module 130.

Step 406: The node rendering module 130 renders a cluster included in the to-be-rendered node list corresponding to the first moment, to obtain rendered images at the first moment in the one or more fields of view.

The node rendering module 130 mainly performs a rendering operation. Because each node in the to-be-rendered node list represents a cluster of an object, the cluster includes a plurality of patches. For any node, the node rendering module 130 may load data of each patch included in the cluster, and render the patch in each cluster based on the loaded data. In this embodiment of this application, a manner in which the patch is rendered is limited. Any manner in which the patch can be rendered is applicable to this embodiment of this application.

The data of the patch includes a vertex location, a normal, UV coordinates (the UV coordinates indicate a location on a plane represented by an image) that are of a triangle, corresponding texture data, and the like. The node rendering module 130 may render each patch by using rasterization rendering. A rasterization rendering pipeline is a conceptual model on which rasterization rendering is based. The rasterization rendering pipeline describes steps that need to be performed when a rasterized graphics system renders a three-dimensional (3D) scene to a two-dimensional (2D) screen.

After rendering the cluster, the node rendering module 130 may output the rendered images at the first moment in the one or more fields of view. The node rendering module 130 may send a corresponding rendered image to each display apparatus 200, and the display module may display the rendered image at the first moment after obtaining the corresponding rendered image.

In this case, the rendered image at the first moment is generated. A rendered image at a next moment of the first moment is generated below. In other words, the rendered image at the second moment is generated. For details, refer to step 407 and step 408.

Step 407: The node clipping module 120 performs node clipping on the node in the to-be-rendered node list and the node in the to-be-deleted node list that correspond to the first moment, to generate a to-be-rendered node list and a to-be-deleted node list that correspond to the second moment.

A node in the to-be-rendered node list corresponding to the second moment meets the following conditions: a screen space error of the node at the second moment is not greater than the error threshold of the field of view, and a screen space error of a parent node of the node at the second moment is greater than the error threshold of the field of view.

A node in the to-be-deleted node list corresponding to the second moment meets the following conditions: a screen space error of the node at the second moment is not greater than the error threshold of the field of view, and a screen space error of a parent node of the node at the first moment is not greater than the error threshold of the field of view.

Different from step 404, in a process of generating the rendered image at the second moment, the node clipping module 120 does not need to directly perform node clipping on a DAD of each object, but performs node clipping on the node in the to-be-rendered node list and the node in the to-be-deleted node list that correspond to the first moment.

When performing node clipping on the node in the to-be-rendered node list and the node in the to-be-deleted node list that correspond to the first moment, the node clipping module 120 needs to distinguish a node that can be added to the to-be-rendered node list corresponding to the second moment, a node that can be added to the to-be-deleted node list corresponding to the second moment, and a to-be-discarded node.

It should be noted that, because time goes by from the first moment to the second moment, the field of view information of each field of view may change. In other words, a screen space error of each node at the second moment changes. A screen space error that occurs subsequently is a screen space error of the node at the second moment.

Nodes in the to-be-rendered node list corresponding to the second moment may be divided into a plurality of groups based on a field of view, and a node included in each group represents a cluster of an object that needs to be displayed in one field of view. A node in any group meets the following conditions: a screen space error (the screen space error is a screen space error of the node at the second moment) of the node is not greater than an error threshold of the field of view, and a screen space error (the screen space error is a screen space error of the parent node at the second moment) of a parent node of the node is greater than the error threshold of the field of view. For descriptions of the screen space error of the node, the screen space error of the parent node, and the error threshold of the field of view, refer to the foregoing content. Details are not described herein again.

Similarly, nodes in the to-be-deleted node list corresponding to the second moment may be divided into a plurality of groups based on the field of view, and a node included in each group represents a cluster of an object that does not need to be displayed in one field of view. A node in any group meets the following conditions: a screen space error of the node is not greater than the error threshold of the field of view, and a screen space error of a parent node of the node is not greater than the error threshold of the field of view.

Similarly, to-be-discarded nodes may be divided into a plurality of groups based on the field of view, and a node included in each group represents a cluster of an object that needs to be discarded in a field of view. A node in any group meets the following condition: a screen space error of the node is greater than an error threshold of the view. Such a node is directly discarded, that is, does not need to be added to a node list.

To be specific, each time the node clipping module 120 extracts a node in the to-be-rendered node list or the to-be-deleted node list corresponding to the first moment, the node clipping module 120 may first calculate a screen space error of the node (the screen space error is a screen space error of the node at the second moment) and a screen space error of a parent node (the screen space error is a screen space error of the parent node at the second moment), and obtain an error threshold of a field of view to which the node belongs. When the screen space error of the node, the screen space error of the parent node, and the error threshold of the field of view to which the node belongs are obtained, for the node, the node clipping module 120 may perform the following determining:

First, whether the screen space error of the node is not greater than the error threshold of the field of view to which the node belongs is determined (this is a first determining step). If the screen space error of the node is not greater than the error threshold of the field of view to which the node belongs, whether the screen space error of the parent node of the node is not greater than the error threshold of the field of view to which the node belongs continues to be determined (this is a second determining step). If the screen space error of the parent node of the node is not greater than the error threshold of the field of view to which the node belongs, the node is added to the to-be-deleted node list corresponding to the second moment, and then the node clipping module 120 may extract the parent node of the node to perform determining starting from the first step. If the screen space error of the parent node of the node is greater than the error threshold of the field of view to which the node belongs, the node is added to the to-be-rendered node list corresponding to the second moment. If the screen space error of the node is greater than the error threshold of the field of view to which the node belongs, the node is a node that needs to be discarded. For such a node that needs to be discarded, whether the node intersects with the view frustum may continue to be determined. If the node intersects with the view frustum, it indicates that the node is partially located inside the view frustum and may be displayed. The node clipping module 120 discards the node, and extracts a child node of the node to perform determining starting from the first step. If the node does not intersect with the view frustum, it indicates that the node is located outside the view frustum and is not displayed. The node clipping module 120 may add the node to the to-be-deleted node list corresponding to the first moment.

Similar to step 404, the node clipping module 120 may also perform, in the manner shown in FIG. 4, node clipping on the node in the to-be-rendered node list or the to-be-deleted node list corresponding to the first moment. A difference lies in that when the node clipping module obtains the to-be-rendered node list or the to-be-deleted node list corresponding to the second moment, initially, the node in the to-be-rendered node list or the to-be-deleted node list corresponding to the first moment may be added to the node queue maintained by the plurality of threads.

When obtaining the to-be-rendered node list or the to-be-deleted node list corresponding to the second moment, the node clipping module performs node clipping based on the node in the to-be-rendered node list or the to-be-deleted node list corresponding to the first moment. Compared with a case in which node clipping is directly performed based on the DAG corresponding to the object, in a case in which when obtaining the to-be-rendered node list or the to-be-deleted node list corresponding to the second moment, the node clipping module performs determining based on a node other than the node in the to-be-rendered node list or the to-be-deleted node list corresponding to the first moment, efficiency of generating the to-be-rendered node list or the to-be-deleted node list corresponding to the second moment can be accelerated, and an obtaining manner is also faster and more convenient.

There may be the following relationship between the node in the to-be-rendered node list and the node in the to-be-deleted node list that correspond to the first moment and the node in the to-be-rendered node list and the node in the to-be-deleted node list that correspond to the second moment:

(1) The node in the to-be-rendered node list corresponding to the first moment is consistent with the node in the to-be-rendered node list corresponding to the second moment. In this case, it indicates that a field of view at the first moment and a field of view at the second moment do not move, and field of view information is maintained consistent.
(2) The node in the to-be-rendered node list corresponding to the first moment is discarded, or is added to the to-be-deleted node list corresponding to the second moment. In this case, it indicates that compared with the field of view at the first moment, the field of view at the second moment moves, and moves in a direction of getting away from the object. That is, objects or nodes that can be displayed at the second moment are reduced.

(3) The node in the to-be-deleted node list corresponding to the first moment is added to the to-be-rendered node list corresponding to the second moment. In this case, it indicates that compared with the field of view at the first moment, the field of view at the second moment moves or deflects, and moves in a direction of getting close to the object. That is, objects or nodes that can be displayed at the second moment are increased.

To help understand a relationship between nodes in the two node lists corresponding to the first moment and nodes in the two node lists corresponding to the second moment, the following provides descriptions with reference to specific figures.

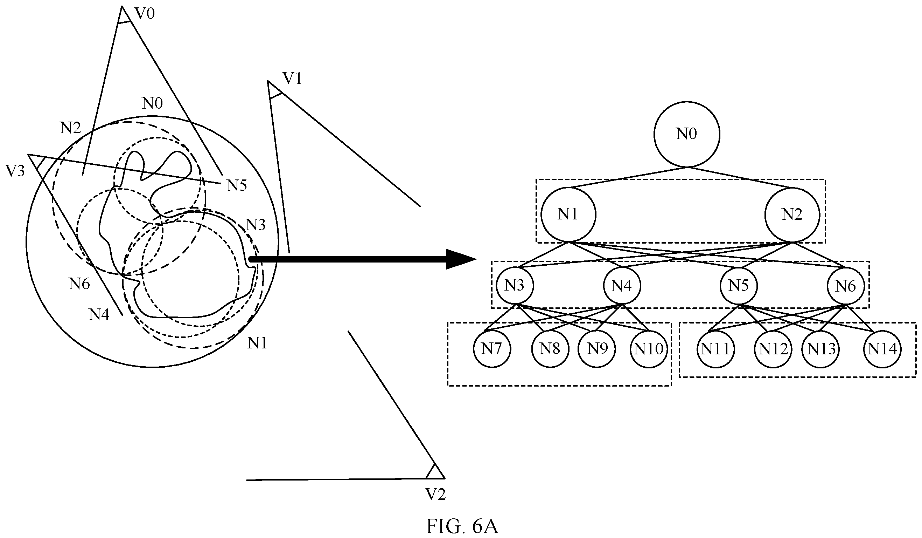

FIG. 6A shows a DAG that corresponds to an object and that is generated by the node clipping module 120. The DAG corresponding to the object includes 15 nodes, and the 15 nodes change to N0, N1, ..., and N14. A node at each level in the DAG represents an LOD of the object. The DAG displays four LODs, and the four LODs are an LOD 0, an LOD 1, an LOD 2, and an LOD 3. Herein, four fields of view, namely, V0, V1, V2, and V3, are used as an example.

At the first moment, for a relationship between the object and each of the fields of view V0, V1, V2, and V3, refer to FIG. 6A. A view frustum of the field of view V1 does not intersect with the object. Therefore, the object in the field of view is discarded in an object culling phase, and a rendered image is not displayed at the first moment in the field of view V1. That is, the V1 field of view is not considered for node clipping.

After the node clipping module 120 culls the DAG corresponding to the object, nodes retained in the fields of view V0, V2, and V3, namely, nodes in the to-be-rendered node list corresponding to the first moment, are as follows:

field of view V0: N1 and N2;
field of view V2: N0; and
field of view V3: N3, N4, N11, N12, N13, and N14.

Clusters represented by these nodes may be transmitted to the node rendering module 130, and the node rendering module 130 renders the clusters represented by these nodes, to obtain images in the fields of view V0, V2, and V3 at the first moment.

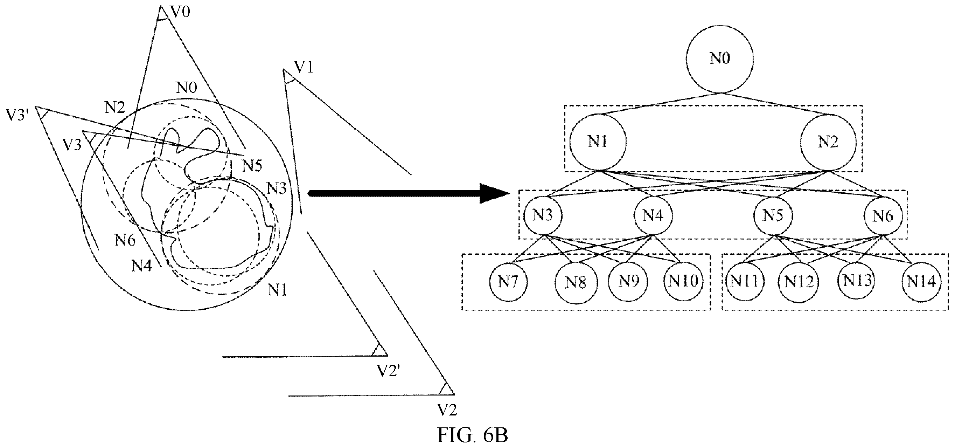

As shown in FIG. 6B, at the second moment, the fields of view V0, V1, V2, and V3 may move. Herein, an example in which the field of view V3 moves backward and arrives at a location of V3', the field of view V2 moves forward and arrives at a location of V2', and other fields of view remain unchanged is used for description.

The node clipping module 120 contacts the node in the to-be-rendered node list and the node in the to-be-deleted node list that correspond to the first moment, and nodes retained in the fields of view V0, V2, and V3, namely, nodes in the to-be-rendered node list corresponding to the second moment, are as follows:

field of view V0: N1 and N2;
field of view V2': N1 and N2; and
field of view V3': N3, N4, N5, and N6.

It can be learned that, because the field of view V2 moves close to the object, nodes displayed in the field of view V2' are increased. To be specific, a larger level can be displayed, and more details can be displayed. Because the field of view V2 moves away from the object, nodes displayed in the field of view V2' are reduced. To be specific, a smaller level can be displayed, and fewer details can be displayed.

Step 408: The node clipping module 120 transmits the to-be-rendered node list corresponding to the second moment to the node rendering module 130.

Step 409: The node rendering module 130 renders a cluster represented by each node in the to-be-rendered node list corresponding to the second moment, to generate rendered images at the second moment in the one or more fields of view. For details, refer to a manner of performing step 406. Details are not described herein again.

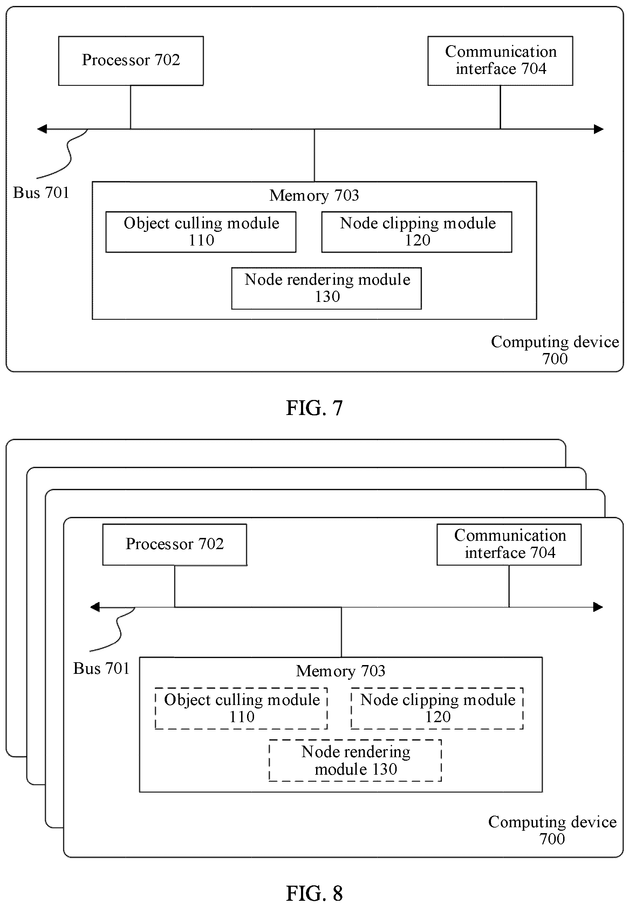

This application further provides a computing device 700. As shown in FIG. 7, the computing device 700 includes a bus 701, a processor 702, a memory 703, and a communication interface 704. The processor 702, the memory 703, and the communication interface 704 communicate with each other through the bus 701. The computing device 700 may be a server or a terminal device. It should be understood that quantities of processors and memories in the computing device 700 are not limited in this application.

The bus 701 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 7, but this does not mean that there is only one bus or only one type of bus. The bus 701 may include a path for transmitting information between components (for example, the memory 703, the processor 702, and the communication interface 704) of the computing device 700.

The processor 702 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 703 may include a volatile memory (volatile memory), for example, a random access memory (random access memory, RAM). The processor 702 may further include a nonvolatile memory (nonvolatile memory), for example, a read-only memory (read-only memory, ROM), a flash memory, a hard disk drive (hard disk drive, HDD), or a solid-state drive (solid-state drive, SSD).

The memory 703 stores executable program code, and the processor 702 executes the executable program code, to separately implement functions of the object culling module 110, the node clipping module 120, and the node rendering module 130, so as to implement the image rendering method. In other words, the memory 703 stores instructions used to perform the image rendering method.

Alternatively, the memory 703 stores executable code, and the processor 702 executes the executable code, to separately implement functions of the rendering apparatus 100, so as to implement the image rendering method. In other words, the memory 703 stores instructions used to perform the image rendering method.

The communication interface 704 is a transceiver module, for example, but not limited to, a network interface card or a transceiver, to implement communication between the computing device 700 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 8, the computing device cluster includes at least one computing device 700. The memory 703 in the one or more computing devices 700 in the computing device cluster may store same instructions used to perform the image rendering method.

In some possible implementations, the memory 703 in the one or more computing devices in the computing device cluster may also separately store some instructions used to perform the image rendering method. In other words, a combination of the one or more computing devices 700 may jointly execute the instructions used to perform the image rendering method.

It should be noted that memories 703 in different computing devices in the computing device cluster may store different instructions respectively used to perform some functions of the rendering apparatus 100. In other words, the instructions stored in the memory 703 in different computing devices 700 may implement functions of one or more of the object culling module 110, the node clipping module 120, and the node rendering module 130.

In some possible implementations, the one or more computing devices in the computing device cluster may be connected through a network. The network may be a wide area network, a local area network, or the like.

An embodiment of this application further provides a computer program product including instructions. The computer program product may be a software or program product that includes instructions and that can run on a computing device or be stored in any usable medium. When the computer program product runs on at least one computing device, the at least one computing device is enabled to perform an application deployment method or an application deployment method.

Embodiments of this application further provide a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform an application deployment method or instruct the computing device to perform an application deployment method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

**Claims**

1. An image rendering method, wherein the method comprises:

obtaining a to-be-rendered object set, wherein the to-be-rendered object set comprises objects that need to be displayed in a plurality of fields of view at a first moment;
obtaining a directed acyclic graph DAG corresponding to each object in the to-be-rendered object set, wherein the DAG corresponding to the object describes an association relationship between clusters at a plurality of levels of the object, and one node in the DAG corresponding to the object represents one cluster at one level of the object;

performing node clipping on the node in the DAG corresponding to each object, to generate a to-be-rendered node list corresponding to the first moment; and

rendering a cluster comprised in the to-be-rendered node list corresponding to the first moment.

2. The method according to claim 1, wherein nodes comprised in the to-be-rendered node list corresponding to the first moment are divided into a plurality of groups, and each group corresponds to one field of view; and

a node in each group meets the following conditions: a screen space error of the node at the first moment is not greater than an error threshold of the field of view, and a screen space error of a parent node of the node at the first moment is greater than the error threshold of the field of view.

3. The method according to claim 1 or 2, wherein the method further comprises:

performing node clipping on the node in the DAG corresponding to each object, to generate a to-be-deleted node list corresponding to the first moment, wherein

nodes comprised in the to-be-deleted node list corresponding to the first moment are divided into a plurality of groups, and each group corresponds to one field of view; and

a node in each group meets the following conditions:

a screen space error of the node at the first moment is not greater than the error threshold of the field of view, and a screen space error of a parent node of the node at the first moment is not greater than the error threshold of the field of view.

4. The method according to claim 3, wherein the method further comprises:

generating a to-be-rendered node list corresponding to a second moment based on the to-be-rendered node list and the to-be-deleted node list that correspond to the first moment; and

rendering a cluster comprised in the to-be-rendered node list corresponding to the second moment.

5. The method according to claim 4, wherein nodes comprised in the to-be-rendered node list corresponding to the second moment are divided into a plurality of groups, and each group corresponds to one field of view; and

a node in each group meets the following conditions: a screen space error of the node at the second moment is not greater than the error threshold of the field of view, and a screen space error of a parent node of the node at the second moment is greater than the error threshold of the field of view.

6. The method according to any one of claims 1 to 5, wherein the obtaining a to-be-rendered object set comprises:

separately perform view frustum culling and occlusion culling on candidate objects in the plurality of fields of view, to obtain an object that needs to be displayed in each field of view; and obtain the to-be-rendered object set based on the object that needs to be displayed in each field of view.

7. A rendering apparatus, wherein the apparatus comprises:

an object culling module, configured to obtain a to-be-rendered object set, wherein the to-be-rendered object set comprises objects that need to be displayed in a plurality of fields of view at a first moment;

a node clipping module, configured to: obtain a directed acyclic graph DAG corresponding to each object in the to-be-rendered object set, wherein the DAG corresponding to the object describes an association relationship between clusters at a plurality of levels of the object, and one node in the DAG corresponding to the object represents one cluster at one level of the object; and perform node clipping on the node in the DAG corresponding to each object, to generate a to-be-rendered node list corresponding to the first moment; and

a node rendering module, configured to render a cluster comprised in the to-be-rendered node list corresponding to the first moment.

8. The apparatus according to claim 7, wherein nodes comprised in the to-be-rendered node list corresponding to the first moment are divided into a plurality of groups, and each group corresponds to one field of view; and

a node in each group meets the following conditions: a screen space error of the node at the first moment is not greater than an error threshold of the field of view, and a screen space error of a parent node of the node at the first moment is greater than the error threshold of the field of view.

9. The apparatus according to claim 7 or 8, wherein

the node clipping module is further configured to perform node clipping on the node in the DAG corresponding to each object, to generate a to-be-deleted node list corresponding to the first moment, wherein

nodes comprised in the to-be-deleted node list corresponding to the first moment are divided into a plurality of groups, and each group corresponds to one field of view; and

a node in each group meets the following conditions:

a screen space error of the node at the first moment is not greater than the error threshold of the field of view, and a screen space error of a parent node of the node at the first moment is not greater than the error threshold of the field of view.

10. The apparatus according to claim 9, wherein

the node clipping module is further configured to generate a to-be-rendered node list corresponding to a second moment based on the to-be-rendered node list and the to-be-deleted node list that correspond to the first moment; and

the node rendering module is further configured to render a cluster comprised in the to-be-rendered node list corresponding to the second moment.

11. The apparatus according to claim 10, wherein nodes comprised in the to-be-rendered node list corresponding to the second moment are divided into a plurality of groups, and each group corresponds to one field of view; and

a node in each group meets the following conditions: a screen space error of the node at the second moment is not greater than the error threshold of the field of view, and a screen space error of a parent node of the node at the second moment is greater than the error threshold of the field of view.

12. The apparatus according to any one of claims 7 to 11, wherein when obtaining the to-be-rendered object set, the object culling module is configured to:

separately perform view frustum culling and occlusion culling on candidate objects in the plurality of fields of view, to obtain an object that needs to be displayed in each field of view; and

obtain the to-be-rendered object set based on the object that needs to be displayed in each field of view.

13. A computing device cluster, comprising at least one computing device, wherein each computing device comprises a processor and a memory; and

the processor of the at least one computing device is configured to execute instructions stored in the memory of the at least one computing device, to enable the computing device cluster to perform the method according to any one of claims 1 to 6.

14. A computer program product comprising instructions, wherein when the instructions are run by a computing device cluster, the computing device cluster is enabled to perform the method according to any one of claims 1 to 6.

15. A computer-readable storage medium, comprising computer program instructions, wherein when the computer program instructions are executed by a computing device cluster, the computing device cluster performs the method according to any one of claims 1 to 6.

FIG. 1

FIG. 2

FIG. 3

| Object culling module 110 | Node clipping module 120 | Node rendering module 130 |
|---|---|---|

401: Obtain a to-be-rendered object set

402: To-be-rendered object set →

403: Generate a DAG corresponding to an object

404: Generate a to-be-rendered node list and a to-be-deleted node list that correspond to a first moment

405: To-be-rendered node list corresponding to the first moment →

406: Render a cluster included in the to-be-rendered node list corresponding to the first moment

407: Perform clipping on the to-be-rendered node list and the to-be-deleted node list that correspond to the first moment, to generate to-be-rendered node list corresponding to a second moment

408: To-be-rendered node list corresponding to the second moment →

409: Render a cluster included in the to-be-rendered node list corresponding to the second moment

FIG. 4

FIG. 5

FIG. 6A

FIG. 6B

FIG. 7

FIG. 8

## INTERNATIONAL SEARCH REPORT

| International application No. |
|---|
| **PCT/CN2023/080235** |

**A.    CLASSIFICATION OF SUBJECT MATTER**

G06T15/00(2011.01)i

According to International Patent Classification (IPC) or to both national classification and IPC

**B.    FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS; CNTXT; DWPI; VEN; USTXT; EPTXT; WOTXT; CNKI: 图像, 渲染, 时刻, 多, 视角, 对象, 有向无环图, 面片, 细节层次, 节点, 剪裁, 剔除, 虚拟现实, image, rendering, time, multiple, field of view, object, DAG, patch, LOD, node, clip, cull, virtual reality

**C.    DOCUMENTS CONSIDERED TO BE RELEVANT**

| Category* | Citation of document, with indication, where appropriate, of the relevant passages | Relevant to claim No. |
|---|---|---|
| Y | CN 114627219 A (ZTE CORP. et al.) 14 June 2022 (2022-06-14)<br>    description, paragraphs 30-161, and figures 2-3 | 1-15 |
| Y | CN 110163943 A (SHENZHEN TENCENT INFORMATION TECHNOLOGY CO., LTD.)<br>23 August 2019 (2019-08-23)<br>    description paragraphs 75-90, and figures 3-4 | 1-15 |
| Y | JP H08293041 A (DAIKIN INDUSTRIES, LTD.) 05 November 1996 (1996-11-05)<br>    description, paragraphs 27-66, and figures 1-14 | 1-15 |
| A | CN 112181531 A (JIAN JIBO) 05 January 2021 (2021-01-05)<br>    entire document | 1-15 |
| A | CN 113628317 A (HUAWEI TECHNOLOGIES CO., LTD.) 09 November 2021 (2021-11-09)<br>    entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 June 2023** | **06 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/080235**

| Patent document cited in search report | | | Publication date (day/month/year) | Patent family member(s) | | | Publication date (day/month/year) |
|---|---|---|---|---|---|---|---|
| CN | 114627219 | A | 14 June 2022 | WO | 2022121525 | A1 | 16 June 2022 |
| CN | 110163943 | A | 23 August 2019 | | None | | |
| JP | H08293041 | A | 05 November 1996 | JP | 3724006 | B2 | 07 December 2005 |
| CN | 112181531 | A | 05 January 2021 | | None | | |
| CN | 113628317 | A | 09 November 2021 | WO | 2021228031 | A1 | 18 November 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210960503